(19) Europäisches Patentamt
European Patent Office
Office européen des brevets

(11) **EP 4 113 350 A1**

(12) **EUROPEAN PATENT APPLICATION**
published in accordance with Art. 153(4) EPC

(43) Date of publication:
**04.01.2023 Bulletin 2023/01**

(21) Application number: **20930903.8**

(22) Date of filing: **14.04.2020**

(51) International Patent Classification (IPC):
**G06F 30/27** $^{(2020.01)}$        **G06F 30/10** $^{(2020.01)}$

(52) Cooperative Patent Classification (CPC):
**G06F 30/10; G06F 30/27**

(86) International application number:
**PCT/JP2020/016479**

(87) International publication number:
**WO 2021/210081 (21.10.2021 Gazette 2021/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **TAKAHASHI, Akiko
  Tokyo 100-8310 (JP)**
• **OTSUBO, Fumie
  Tokyo 100-8310 (JP)**
• **MIYAMOTO, Takaaki
  Tokyo 100-8310 (JP)**

(74) Representative: **Pfenning, Meinig & Partner mbB
Patent- und Rechtsanwälte
Theresienhöhe 11a
80339 München (DE)**

(54) **LAYOUT CREATION DEVICE, LAYOUT CREATION METHOD, LEARNING MODEL
GENERATION DEVICE, AND LEARNING MODEL GENERATION METHOD**

(57)     A layout creation device is configured to include a position data acquiring unit (2) to acquire position data indicating an installation position of an electrical appliance installed in a space, and a layout creating unit (3) to create layout data indicating a layout of the electrical appliance for the space by giving the position data and usage condition data indicating a usage condition of the electrical appliance to a learning model (4).

FIG. 1

**Description**

**TECHNICAL FIELD**

The present disclosure relates to a layout creation device and a layout creation method for creating layout data indicating a layout of electrical appliances, and a learning model generation device and a learning model generation method for generating a learning model.

**BACKGROUND ART**

For a user living in a room in which electrical appliances are installed, the layout of current electrical appliances for the room is not necessarily optimal. Therefore, changing the layout of the electrical appliances may improve the comfort of the user's life.

Patent Literature 1 discloses a device placement determination system that determines placement of devices. The device placement determination system includes an information input unit to receive entry of a room layout, a live activity line, and the like when determining device placement, and determines the device placement on the basis of the live activity line or the like the entry of which has been received by the information input unit.

**CITATION LIST**

**PATENT LITERATURE**

Patent Literature 1: JP 2014-49081 A

**SUMMARY OF INVENTION**

**TECHNICAL PROBLEM**

In the device placement determination system disclosed in Patent Literature 1, the placement of the devices cannot be determined unless the user draws a room layout, a live activity line, and the like, and thus there is a problem that it takes time and effort for the user.

The present disclosure has been made to solve the above problems, and an object of the present disclosure is to provide a layout creation device and a layout creation method capable of creating layout data indicating a layout of electrical appliances without taking time and effort for a user.

**SOLUTION TO PROBLEM**

A layout creation device according to the present disclosure includes: a position data acquiring unit to acquire position data indicating an installation position of an electrical appliance installed in a space; and a layout creating unit to create layout data indicating a layout of the electrical appliance for the space by giving the position data and usage condition data indicating a usage condition of the electrical appliance to a learning model.

ADVANTAGEOUS EFFECTS OF INVENTION

According to the present disclosure, it is possible to create layout data indicating a layout of electrical appliances without taking time and effort for a user.

BRIEF DESCRIPTION OF DRAWINGS

FIG. 1 is a configuration diagram illustrating a layout creation device according to a first embodiment.
FIG. 2 is a hardware configuration diagram illustrating hardware of the layout creation device according to the first embodiment.
FIG. 3 is an explanatory view illustrating a plurality of non-contact power supply coils laid on the entire surface of a floor.
FIG. 4 is a hardware configuration diagram of a computer in a case where the layout creation device is implemented by software, firmware, or the like.
FIG. 5 is a flowchart illustrating a layout creation method which is a processing procedure performed in the layout creation device.

FIG. 6 is an explanatory diagram illustrating an example of a current layout of electrical appliances for a space.

FIG. 7 is an explanatory diagram illustrating a layout of electrical appliances (n) indicated by layout data acquired by a layout creating unit 3.

FIG. 8 is a configuration diagram illustrating a layout creation device according to a second embodiment.

FIG. 9 is a hardware configuration diagram illustrating hardware of the layout creation device according to the second embodiment.

FIG. 10 is a configuration diagram illustrating a layout creation device according to a third embodiment.

FIG. 11 is a hardware configuration diagram illustrating hardware of the layout creation device according to the third embodiment.

FIG. 12 is a configuration diagram illustrating a learning model generation device according to a fourth embodiment.

FIG. 13 is a hardware configuration diagram illustrating hardware of the learning model generation device according to the fourth embodiment.

FIG. 14 is a hardware configuration diagram of a computer in a case where the learning model generation device is implemented by software, firmware, or the like.

FIG. 15 is a flowchart illustrating a learning model generation method which is a processing procedure performed in the learning model generation device.

**DESCRIPTION OF EMBODIMENTS**

In order to explain the present disclosure in more detail, some modes for carrying out the present disclosure will be described below with reference to the accompanying drawings.

First Embodiment.

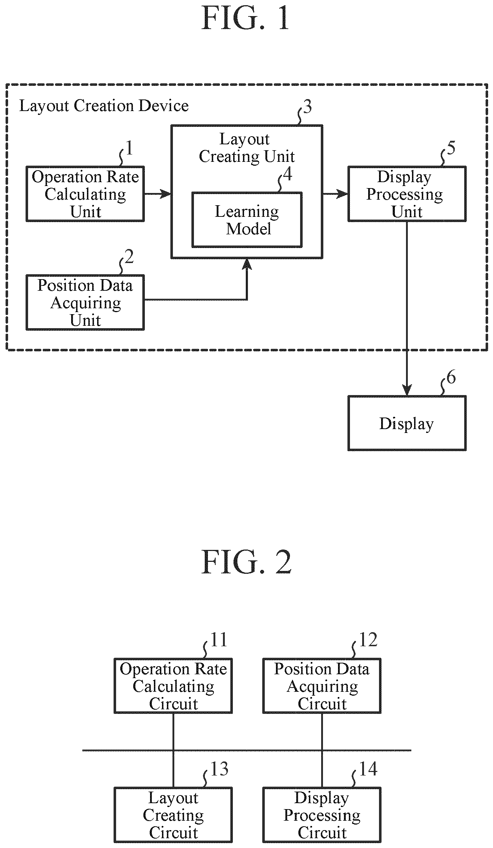

FIG. 1 is a configuration diagram illustrating a layout creation device according to a first embodiment.

FIG. 2 is a hardware configuration diagram illustrating hardware of the layout creation device according to the first embodiment.

In the layout creation device illustrated in FIG. 1, it is assumed that electrical appliances are installed in a space. The space corresponds to a room in which a user lives, a selling area of a commercial facility, and the like. Examples of the electrical appliances include a television, a refrigerator, and a heater.

It is assumed that the power to the electrical appliances installed in the space is supplied from a non-contact power supply coil installed on the floor of the space. Note that, the power to the electrical appliances is not limited to the power supplied from the non-contact power supply coil, and may be power supplied from an outlet installed on a wall or the like.

The non-contact power supply coil wirelessly supplies power to electrical appliances. Since the non-contact power supply coil itself is known, the detailed structure of the non-contact power supply coil will not be described.

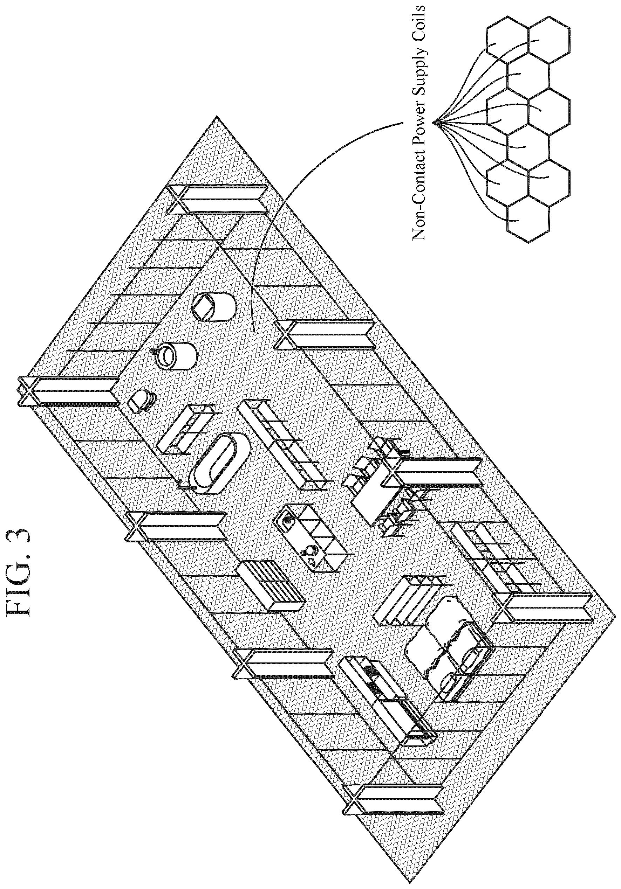

As illustrated in FIG. 3, when a plurality of non-contact power supply coils are laid on the entire surface of the floor, an electrical appliance installed on any one of the plurality of non-contact power supply coils can receive power supply from the non-contact power supply coil immediately below the electrical appliance.

FIG. 3 is an explanatory view illustrating a plurality of non-contact power supply coils laid on the entire surface of a floor.

The layout creation device illustrated in FIG. 1 includes an operation rate calculating unit 1, a position data acquiring unit 2, a layout creating unit 3, and a display processing unit 5.

The operation rate calculating unit 1 is implemented by, for example, an operation rate calculating circuit 11 illustrated in FIG. 2.

The operation rate calculating unit 1 measures, as usage condition data indicating a usage condition of each of N (N is an integer of 1 or more) electrical appliances (n) (n = 1, ⋯, N) included in measurement targets among a plurality of electrical appliances installed in a certain space, an energization time $T_n$ of each of the electrical appliances (n).

Although all the electrical appliances installed in the space may be included in the measurement targets, it is conceivable that the necessity of including small electrical appliances such as a smartphone or an electric shaver in the layout target is small since the installation place is not fixed. Therefore, here, for example, it is assumed that electrical appliances whose installation positions are fixed, such as a television, are included in the measurement targets.

The operation rate calculating unit 1 calculates an operation rate $OR_n$ of each of the electrical appliances (n) included in the measurement targets from each energization time $T_n$.

The operation rate calculating unit 1 outputs operation rate data indicating the operation rate $OR_n$ of each of the electrical appliances (n) to the layout creating unit 3.

The position data acquiring unit 2 is implemented by, for example, a position data acquiring circuit 12 illustrated in FIG. 2.

The position data acquiring unit 2 acquires position data indicating the installation position $P_n$ of each of the electrical appliances (n) included in the measurement targets.

The position data acquiring unit 2 outputs position data indicating the installation position $P_n$ of each of the electrical appliances (n) to the layout creating unit 3.

The layout creating unit 3 is implemented by, for example, a layout creating circuit 13 illustrated in FIG. 2.

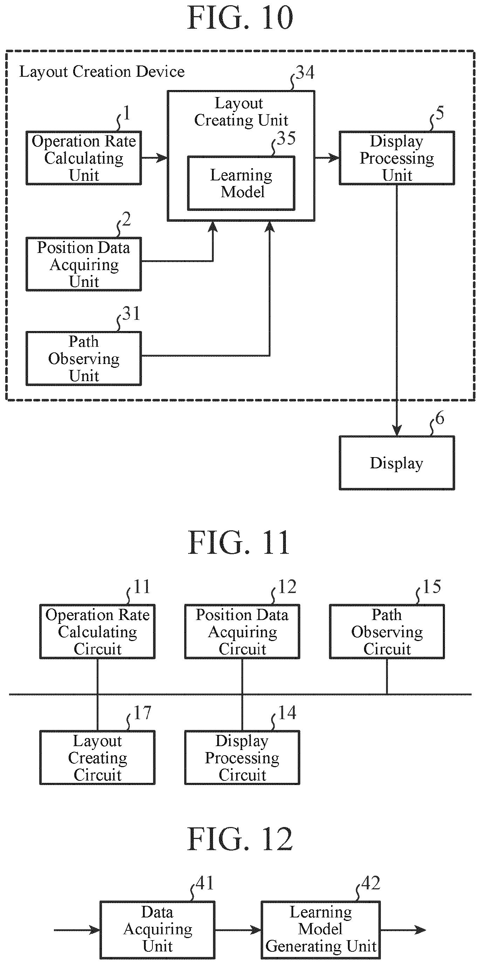

The layout creating unit 3 includes, for example, a learning model 4 generated by a learning model generation device illustrated in FIG. 12 to be described later.

The layout creating unit 3 creates layout data indicating the layout of electrical appliances (n) for the space by giving the position data acquired by the position data acquiring unit 2 to the learning model 4 and giving the operation rate data indicating the operation rate $OR_n$ calculated by the operation rate calculating unit 1 to the learning model 4 as the usage condition data indicating the usage condition of each electrical appliance.

That is, the layout creating unit 3 gives the position data and the operation rate data to the learning model 4, and acquires, from the learning model 4, layout data indicating a layout for a space of all the electrical appliances (n) included in the measurement targets or some of the electrical appliances (n) included in the measurement targets.

The layout creating unit 3 outputs the created layout data to the display processing unit 5.

In the layout creation device illustrated in FIG. 1, the layout creating unit 3 includes the learning model 4 generated by the learning model generation device illustrated in FIG. 12. However, this is merely an example, and the layout creating unit 3 may include a learning model 4 generated by a learning model generation device other than the learning model generation device illustrated in FIG. 12.

The learning model 4, the details thereof will be described later, corresponds to, for example, a neural network or the like that learns the layout of one or more electrical appliances suitable for installation in a space using the operation rate data as the usage condition data, the position data, and the training data.

The display processing unit 5 is implemented by, for example, a display processing circuit 14 illustrated in FIG. 2.

The display processing unit 5 generates display data for displaying the layout indicated by the layout data output from the layout creating unit 3, and outputs the display data to a display 6.

The display 6 is implemented by, for example, a liquid crystal display.

The display 6 displays a layout for a space of all the electrical appliances (n) included in the measurement targets or a part of the electrical appliances (n) included in the measurement targets in accordance with the display data output from the display processing unit 5.

In FIG. 1, it is assumed that each of the operation rate calculating unit 1, the position data acquiring unit 2, the layout creating unit 3, and the display processing unit 5, which are components of the layout creation device, is implemented by dedicated hardware as illustrated in FIG. 2. That is, it is assumed that the layout creation device is implemented by the operation rate calculating circuit 11, the position data acquiring circuit 12, the layout creating circuit 13, and the display processing circuit 14.

Each of the operation rate calculating circuit 11, the position data acquiring circuit 12, the layout creating circuit 13, and the display processing circuit 14 corresponds to, for example, a single circuit, a composite circuit, a programmed processor, a parallel-programmed processor, an application specific integrated circuit (ASIC), a field-programmable gate array (FPGA), or a combination thereof.

The components of the layout creation device are not limited to those implemented by dedicated hardware, and the layout creation device may be implemented by software, firmware, or a combination of software and firmware.

The software or firmware is stored in a memory of a computer as a program. The computer means hardware that executes a program, and corresponds to, for example, a central processing unit (CPU), a central processor, a processing unit, an arithmetic unit, a microprocessor, a microcomputer, a processor, or a digital signal processor (DSP).

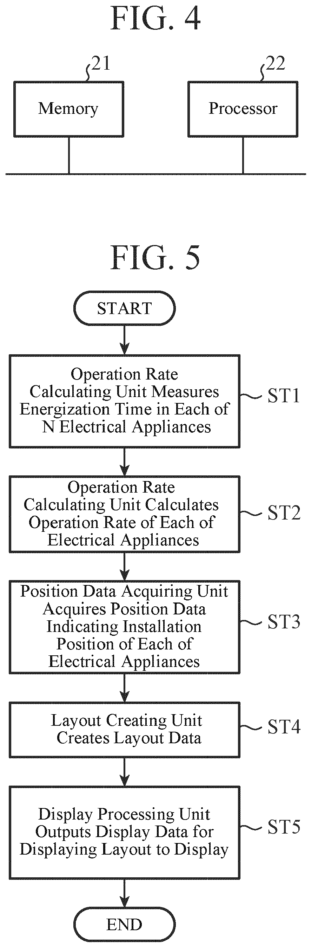

FIG. 4 is a hardware configuration diagram of a computer in a case where the layout creation device is implemented by software, firmware, or the like.

In a case where the layout creation device is implemented by software, firmware, or the like, a program for causing a computer to execute a processing procedure performed in each of the operation rate calculating unit 1, the position data acquiring unit 2, the layout creating unit 3, and the display processing unit 5 is stored in a memory 21. Then, a processor 22 of the computer executes the program stored in the memory 21.

In addition, FIG. 2 illustrates an example in which each of the components of the layout creation device is implemented by dedicated hardware, and FIG. 4 illustrates an example in which the layout creation device is implemented by software, firmware, or the like. However, they are merely examples, and some of components in the layout creation device may be implemented by dedicated hardware, and the remaining components may be implemented by software, firmware, or the like.

Next, an operation of the layout creation device illustrated in FIG. 1 will be described.

FIG. 5 is a flowchart illustrating a layout creation method which is a processing procedure performed in the layout creation device.

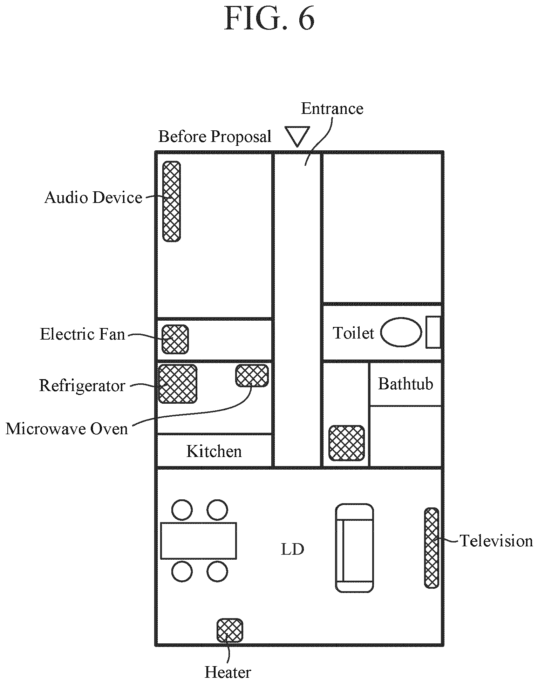

FIG. 6 is an explanatory diagram illustrating an example of a current layout of the electrical appliances for the space.

In the example of FIG. 6, the space is an apartment in a building, and six electrical appliances (n) (n = 1, ···, 6) are installed in the space. Specifically, as the six electrical appliances (n), one audio device, one electric fan, one refrigerator, one microwave oven, one heater, and one television are installed in the space.

First, the operation rate calculating unit 1 measures an energization time $T_n$ of each of N electrical appliances (n) (n = 1, ···, N) included in measurement targets among a plurality of electrical appliances installed in a certain space (step ST1 in FIG. 5).

When the N electrical appliances (n) are supplied with power from the non-contact power supply coils, the operation rate calculating unit 1 acquires power supply information indicating power supply statuses of the plurality of non-contact power supply coils from a control device (not illustrated) of each of the non-contact power supply coils. On the basis of the power supply information, the operation rate calculating unit 1 specifies a non-contact power supply coil that supplies power to the electrical appliance (n) among the plurality of non-contact power supply coils, and observes the power supply status of the specified non-contact power supply coil to measure the energization time $T_n$ of the electrical appliance (n).

In the layout creation device illustrated in FIG. 1, the operation rate calculating unit 1 measures the energization time $T_n$ of each electrical appliance (n) on the basis of the power supply information output from a control device (not illustrated) of a non-contact power supply coil. However, this is merely an example, and the operation rate calculating unit 1 may measure the energization time $T_n$ of each of the electrical appliances (n), for example, by observing the current flowing through each of the electrical appliances (n).

Next, the operation rate calculating unit 1 calculates the operation rate $OR_n$ of each of the electrical appliances (n) from the energization time $T_n$ of each of the electrical appliances (n) as expressed by the following Formula (1) (step ST2 in FIG. 5).

$$OR_n = \frac{T_n}{T_{all}} \times 100 \qquad (1)$$

In Formula (1), $T_{all}$ is a period from a time point at which the electrical appliance (n) is installed in the space to the present. The energization time $T_n$ is a time during which the electrical appliance (n) is energized during the period $T_{all}$.

Note that the period $T_{all}$ is not limited to a period from the time point at which the electrical appliance (n) is installed in the space to the present, and may be a constant period such as one month or half a year.

The operation rate calculating unit 1 outputs operation rate data indicating the operation rate $OR_n$ of each of the electrical appliances (n) to the layout creating unit 3.

The position data acquiring unit 2 acquires position data indicating the installation position $P_n$ of each of the electrical appliances (n) included in the measurement targets (step ST3 in FIG. 5).

When the N electrical appliances (n) are supplied with power from the non-contact power supply coils, the position data acquiring unit 2 acquires position data indicating the installation position of the non-contact power supply coil supplying power to each of the electrical appliances (n) from the control device (not illustrated) of each of the non-contact power supply coils. Then, the position data acquiring unit 2 determines that the installation position of each of the non-contact power supply coils indicated by the acquired position data is the installation position $P_n$ of each of the electrical appliances (n), and outputs the position data to the layout creating unit 3.

In the layout creation device illustrated in FIG. 1, the position data acquiring unit 2 acquires the position data output from the control device (not illustrated) of each of the non-contact power supply coils as the position data indicating the installation position $P_n$ of each of the electrical appliances (n). However, this is merely an example, and the position data acquiring unit 2 may specify the installation position $P_n$ of each of the electrical appliances (n) on the basis of, for example, image information from a camera capturing the inside of the room, and output position data indicating the specified installation position $P_n$ to the layout creating unit 3.

The layout creating unit 3 acquires the operation rate data output from the operation rate calculating unit 1 and the position data output from the position data acquiring unit 2.

The layout creating unit 3 creates layout data by giving the operation rate data and the position data to the learning model 4 (step ST4 in FIG. 5).

That is, the layout creating unit 3 gives the operation rate data and the position data to the learning model 4, and acquires, from the learning model 4, layout data indicating a layout for a space of all the electrical appliances (n) included in the measurement targets or a part of the electrical appliances (n) included in the measurement targets.

The layout creating unit 3 outputs the created layout data to the display processing unit 5.

The layout data includes the installation recommended electrical appliances for the space and the installation position of each of the installation recommended electrical appliances. When the operation rates $OR_n$ of all the electrical appliances (n) included in the measurement targets are higher than a first threshold, there is a high possibility that all the electrical appliances (n) are included in the installation recommended electrical appliances.

There is a high possibility that, among one or more electrical appliances (n) included in the measurement targets, an electrical appliance (n) having an operation rate $OR_n$ lower than the first threshold is not included in the installation recommended electrical appliances.

In addition, in some cases, the installation recommended electrical appliances include an electrical appliance different from the electrical appliances (n) included in the measurement targets. For example, in a case where the operation rate $OR_n$ of an audio visual (AV) device such as an audio device and a television is higher than a second threshold among one or more electrical appliances (n) included in the measurement targets, it is assumed that there is a high possibility that the AV device is an electrical appliance preferred by the user. Therefore, there is a possibility that another AV device different from the audio device and the television is included in the installation recommended electrical appliances. As another AV device, for example, a 5.1 ch speaker device is assumed. The relation that the first threshold < the second threshold is satisfied.

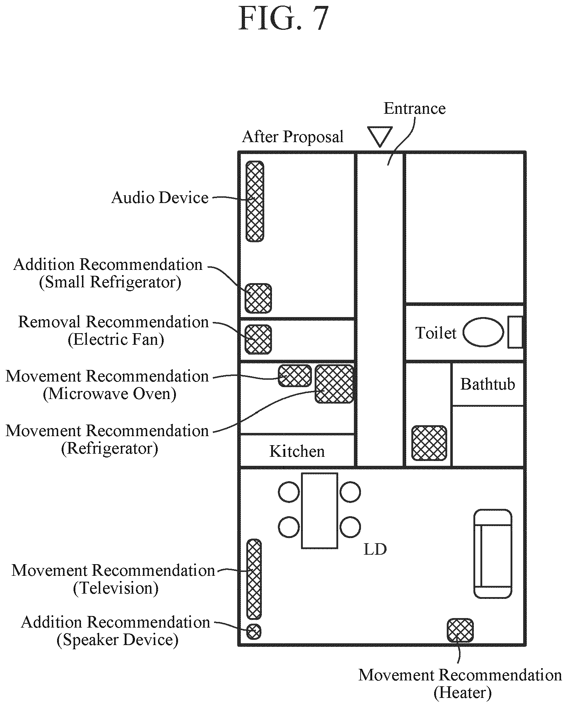

FIG. 7 is an explanatory diagram illustrating a layout of the electrical appliances (n) indicated by layout data acquired by the layout creating unit 3.

In FIG. 7, an addition recommendation includes an electrical appliance different from the electrical appliances (n) included in the measurement targets. In the example of FIG. 7, each of the speaker device and the small refrigerator is included in the addition recommendation.

The movement recommendation includes an electrical appliance whose installation position is changed among electrical appliances (n) included in the measurement targets. In the example of FIG. 7, each of the microwave oven, the refrigerator, the television, and the heater is included in the movement recommendation.

The removal recommendation includes an electrical appliance that is not included in the installation recommended electrical appliances among the electrical appliances (n) included in the measurement targets. In the example of FIG. 7, the electric fan is included in the removal recommendation.

The display processing unit 5 generates display data for displaying the layout indicated by the layout data output from the layout creating unit 3, and outputs the display data to the display 6 (step ST5 in FIG. 5).

The display 6 displays a layout as illustrated in FIG. 7 in accordance with the display data output from the display processing unit 5.

In the first embodiment described above, the layout creation device is configured to include the position data acquiring unit 2 to acquire position data indicating the installation position of an electrical appliance installed in the space, and the layout creating unit 3 to create layout data indicating the layout of the electrical appliance for the space by giving the position data and the usage condition data indicating the usage condition of the electrical appliance to the learning model 4. Therefore, the layout creation device can create layout data indicating the layout of the electrical appliances without taking time and effort for the user.

In the layout creation device illustrated in FIG. 1, the layout creating unit 3 outputs layout data to the display processing unit 5, so that the display processing unit 5 displays the layout on the display 6. However, this is merely an example, and the layout creating unit 3 may transmit layout data to, for example, a communication terminal used by a user living in the space.

Further, the layout creating unit 3 may limit the transmission target of the layout data to the communication terminal used by a user who has a billing contract. In this case, the operation rate calculating unit 1 calculates the operation rate of each of one or more electrical appliances included in the measurement targets among the plurality of electrical appliances installed in the space where the user who has a billing contract lives. In addition, the position data acquiring unit 2 acquires position data indicating an installation position of each of the electrical appliances included in the measurement targets among the plurality of electrical appliances installed in the space where the user who has a billing contract lives. The layout creating unit 3 creates layout data indicating the layout of the electrical appliances for the space where the user who has a billing contract lives.

The user who has a billing contract is, for example, a person who has a billing contract related to provision of layout data with an administrator of the layout creation device illustrated in FIG. 1.

Second Embodiment.

In a second embodiment, a layout creation device including a path observing unit 31 to output, to a layout creating unit 32, path data indicating a path taken by a user living in a space through the space will be described.

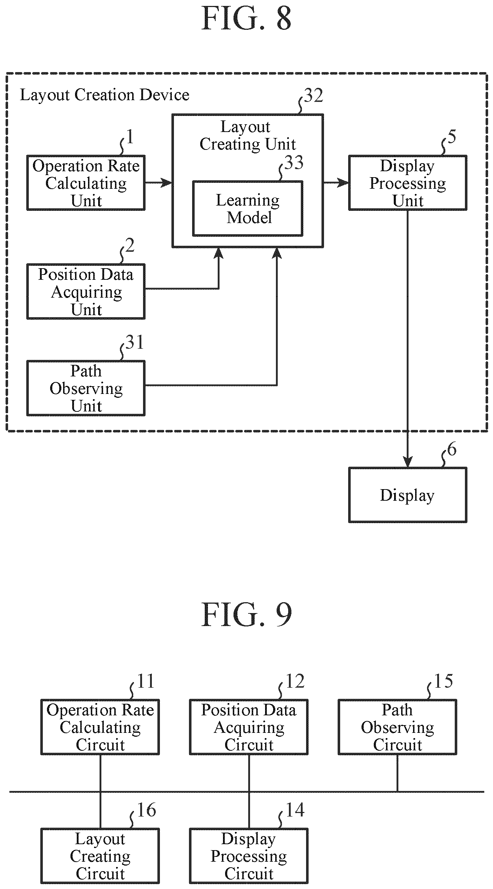

FIG. 8 is a configuration diagram illustrating a layout creation device according to the second embodiment. In FIG. 8, the same reference numerals as those in FIG. 1 denote the same or corresponding parts, and thus description thereof is omitted.

FIG. 9 is a hardware configuration diagram illustrating hardware of the layout creation device according to the second embodiment. In FIG. 9, the same reference numerals as those in FIG. 2 denote the same or corresponding parts, and thus description thereof is omitted.

The path observing unit 31 is implemented by, for example, a path observing circuit 15 illustrated in FIG. 9.

The path observing unit 31 outputs, to the layout creating unit 32, path data indicating a path taken by a user living in the space through the space.

The layout creating unit 32 is implemented by, for example, a layout creating circuit 16 illustrated in FIG. 9.

The layout creating unit 32 includes, for example, a learning model 33 generated by the learning model generation device illustrated in FIG. 12.

The layout creating unit 32 creates layout data indicating a layout of the electrical appliances (n) for the space by giving the usage condition data, the position data, and the path data output from the path observing unit 31 to the learning model 33.

That is, the layout creating unit 32 gives the operation rate data indicating the operation rate $OR_n$ calculated by the operation rate calculating unit 1, the position data acquired by the position data acquiring unit 2, and the path data output from the path observing unit 31 to the learning model 33, and acquires, from the learning model 33, layout data indicating the layout for the space of all the electrical appliances (n) included in the measurement targets or a part of the electrical appliances (n) included in the measurement targets.

The layout creating unit 32 outputs the created layout data to the display processing unit 5.

The learning model 33, the details thereof will be described later, corresponds to, for example, a neural network or the like that learns a layout of one or more electrical appliances suitable for installation in a space using the operation rate data, the position data, the path data, and the training data.

In FIG. 8, it is assumed that each of the operation rate calculating unit 1, the position data acquiring unit 2, the path observing unit 31, the layout creating unit 32, and the display processing unit 5, which are components of the layout creation device, is implemented by dedicated hardware as illustrated in FIG. 9. That is, it is assumed that the layout creation device is implemented by the operation rate calculating circuit 11, the position data acquiring circuit 12, the path observing circuit 15, the layout creating circuit 16, and the display processing circuit 14.

Each of the operation rate calculating circuit 11, the position data acquiring circuit 12, the path observing circuit 15, the layout creating circuit 16, and the display processing circuit 14 corresponds to, for example, a single circuit, a composite circuit, a programmed processor, a parallel-programmed processor, ASIC, FPGA, or a combination thereof.

The components of the layout creation device are not limited to those implemented by dedicated hardware, and the layout creation device may be implemented by software, firmware, or a combination of software and firmware.

In a case where the layout creation device is implemented by software, firmware, or the like, a program for causing a computer to execute a processing procedure performed in each of the operation rate calculating unit 1, the position data acquiring unit 2, the path observing unit 31, the layout creating unit 32, and the display processing unit 5 is stored in the memory 21 illustrated in FIG. 4. Then, the processor 22 illustrated in FIG. 4 executes the program stored in the memory 21.

Furthermore, FIG. 9 illustrates an example in which each of the components of the layout creation device is implemented by dedicated hardware, and FIG. 4 illustrates an example in which the layout creation device is implemented by software, firmware, or the like. However, this is merely an example, and some of components in the layout creation device may be implemented by dedicated hardware, and the remaining components may be implemented by software, firmware, or the like.

Next, an operation of the layout creation device illustrated in FIG. 8 will be described. Since the components other than the path observing unit 31 and the layout creating unit 32 are similar to those of the layout creation device illustrated in FIG. 1, only the operation of the path observing unit 31 and the layout creating unit 32 will be described here.

The path observing unit 31 observes a path taken by a user living in the space through the space, and outputs path data indicating the path to the layout creating unit 32.

In a case where the N electrical appliances (n) are supplied with power from non-contact power supply coils and a weight sensor is installed in each of the non-contact power supply coils, the path observing unit 31 acquires sensor information of the weight sensor from the control device (not illustrated) of each of the non-contact power supply coils. The path observing unit 31 observes the path taken by the user in the space by observing the transition of the weight sensor that detects the weight corresponding to the weight of the user with the lapse of time on the basis of the sensor information of the plurality of weight sensors. Since the observation processing itself of a path taken by the user in a space is a known technique, detailed description thereof will be omitted.

In the layout creation device illustrated in FIG. 8, the path observing unit 31 observes a path taken by the user in the space on the basis of sensor information output from a control device (not illustrated) of each of the non-contact power supply coils. However, this is merely an example, and the path observing unit 31 may observe a path along which the user has taken in the space by analyzing image information from a camera capturing the inside of the room, for example.

The layout creating unit 32 acquires the operation rate data output from the operation rate calculating unit 1, the position data output from the position data acquiring unit 2, and the path data output from the path observing unit 31.

The layout creating unit 32 creates layout data by giving the operation rate data, the position data, and the path data to the learning model 33.

That is, the layout creating unit 32 gives the operation rate data, the position data, and the path data to the learning model 33, and acquires, from the learning model 33, layout data indicating a layout for a space of all the electrical appliances (n) included in the measurement targets or a part of the electrical appliances (n) included in the measurement targets.

The layout creating unit 32 outputs the created layout data to the display processing unit 5.

In the above-described second embodiment, the layout creation device illustrated in FIG. 8 is configured to include the path observing unit 31 to output path data indicating a path taken by a user living in a space through the space, and the layout creating unit 32 creates layout data by giving the path data to the learning model 33 in addition to giving the position data and the usage condition data to the learning model 33. Therefore, similarly to the layout creation device illustrated in FIG. 1, the layout creation device illustrated in FIG. 8 can create layout data indicating the layout of the electrical appliances without taking time and effort for the user. In addition, the layout creation device illustrated in FIG. 8 can acquire layout data indicating a layout with higher creation accuracy than the layout creation device illustrated in FIG. 1.


Third Embodiment.

In a third embodiment, a layout creation device including a layout creating unit 34 to create layout data by giving one or more pieces of data among family data indicating a family structure of a user living in a space, animal presence data indicating presence or absence of an animal in the space, and hobby data indicating a hobby of the user to a learning model 35 will be described.

FIG. 10 is a configuration diagram illustrating the layout creation device according to the third embodiment. In FIG. 10, the same reference numerals as those in FIGS. 1 and 8 denote the same or corresponding parts, and thus description thereof is omitted.

FIG. 11 is a hardware configuration diagram illustrating hardware of the layout creation device according to the third embodiment. In FIG. 11, the same reference numerals as those in FIGS. 2 and 9 denote the same or corresponding parts, and thus description thereof is omitted.

The layout creating unit 34 is implemented by, for example, a layout creating circuit 17 illustrated in FIG. 11.

The layout creating unit 34 includes, for example, a learning model 35 generated by the learning model generation device illustrated in FIG. 12.

The layout creating unit 34 gives operation rate data indicating an operation rate $OR_n$ calculated by the operation rate calculating unit 1 to the learning model 35 as the usage condition data.

In addition, the layout creating unit 34 gives position data acquired by the position data acquiring unit 2 and path data output from the path observing unit 31 to the learning model 35.

Furthermore, the layout creating unit 34 gives one or more pieces of data among family data indicating a family structure of the user living in the space, animal presence data indicating presence or absence of an animal in the space, and hobby data indicating a hobby of the user to the learning model 35.

The layout creating unit 34 creates layout data indicating a layout of the electrical appliances (n) for the space by giving the plurality of pieces of data to the learning model 35.

That is, the layout creating unit 34 gives one or more pieces of data among the family data, the animal presence data, and the hobby data to the learning model 35 in addition to giving the operation rate data, the position data, and the path data to the learning model 35, and acquires, from the learning model 35, layout data indicating a layout for the space of all the electrical appliances (n) included in the measurement targets or a part of the electrical appliances (n) included in the measurement targets.

The layout creating unit 34 outputs the created layout data to the display processing unit 5.

The learning model 35, the details thereof will be described later, corresponds to, for example, a neural network or the like that learns a layout of one or more electrical appliances suitable for installation in a space using one or more pieces of data of family data, animal presence data, and hobby data, operation rate data, position data, path data, and training data.

In the layout creation device illustrated in FIG. 10, the layout creating unit 34 is applied to the layout creation device illustrated in FIG. 8. However, this is merely an example, and the layout creating unit 34 may be applied to the layout creation device illustrated in FIG. 1.

In FIG. 10, it is assumed that each of the operation rate calculating unit 1, the position data acquiring unit 2, the path observing unit 31, the layout creating unit 34, and the display processing unit 5, which are components of the layout creation device, is implemented by dedicated hardware as illustrated in FIG. 11. That is, it is assumed that the layout creation device is implemented by the operation rate calculating circuit 11, the position data acquiring circuit 12, the path observing circuit 15, the layout creating circuit 17, and the display processing circuit 14.

Each of the operation rate calculating circuit 11, the position data acquiring circuit 12, the path observing circuit 15, the layout creating circuit 17, and the display processing circuit 14 corresponds to, for example, a single circuit, a composite circuit, a programmed processor, a parallel-programmed processor, ASIC, FPGA, or a combination thereof.

The components of the layout creation device are not limited to those implemented by dedicated hardware, and the layout creation device may be implemented by software, firmware, or a combination of software and firmware.

In a case where the layout creation device is implemented by software, firmware, or the like, a program for causing a computer to execute a processing procedure in each of the operation rate calculating unit 1, the position data acquiring unit 2, the path observing unit 31, the layout creating unit 34, and the display processing unit 5 is stored in the memory 21 illustrated in FIG. 4. Then, the processor 22 illustrated in FIG. 4 executes the program stored in the memory 21.

Furthermore, FIG. 11 illustrates an example in which each of the components of the layout creation device is implemented by dedicated hardware, and FIG. 4 illustrates an example in which the layout creation device is implemented by software, firmware, or the like. However, this is merely an example, and some of components in the layout creation device may be implemented by dedicated hardware, and the remaining components may be implemented by software, firmware, or the like.

Next, the operation of the layout creation device illustrated in FIG. 10 will be described. Since the layout creation device is similar to the layout creation device illustrated in FIG. 8 except for the layout creating unit 34, only the operation of the layout creating unit 34 will be described here.

The layout creating unit 34 acquires the operation rate data output from the operation rate calculating unit 1, the position data output from the position data acquiring unit 2, and the path data output from the path observing unit 31.

The layout creating unit 34 gives the operation rate data, the position data, and the path data to the learning model 35.

Furthermore, the layout creating unit 34 acquires one or more pieces of data of family data, animal presence data, and hobby data, and gives the acquired data to the learning model 35.

The layout creating unit 34 creates layout data by giving a plurality of pieces of data to the learning model 35 as described above.

That is, the layout creating unit 34 gives a plurality of pieces of data to the learning model 35, and acquires, from the learning model 35, layout data indicating the layout for the space of all the electrical appliances (n) included in the measurement targets or a part of the electrical appliances (n) included in the measurement targets.

The layout creating unit 34 outputs the created layout data to the display processing unit 5.

In the third embodiment described above, the layout creation device illustrated in FIG. 10 is configured in such a way that the layout creating unit 34 creates layout data by giving one or more pieces of data among family data indicating a family structure of a user living in a space, animal presence data indicating presence or absence of an animal in the space, and hobby data indicating a hobby of the user to the learning model 35, in addition to giving the position data and the usage condition data to the learning model 35. Therefore, similarly to the layout creation device illustrated in FIG. 1, the layout creation device illustrated in FIG. 10 can create layout data indicating the layout of the electrical appliances without taking time and effort for the user. In addition, the layout creation device illustrated in FIG. 10 can acquire layout data indicating a layout with higher creation accuracy than the layout creation device illustrated in FIG. 1.

Fourth Embodiment.

In a fourth embodiment, a learning model generation device including a learning model generating unit 42 to generate a learning model will be described.

FIG. 12 is a configuration diagram illustrating a learning model generation device according to the fourth embodiment.

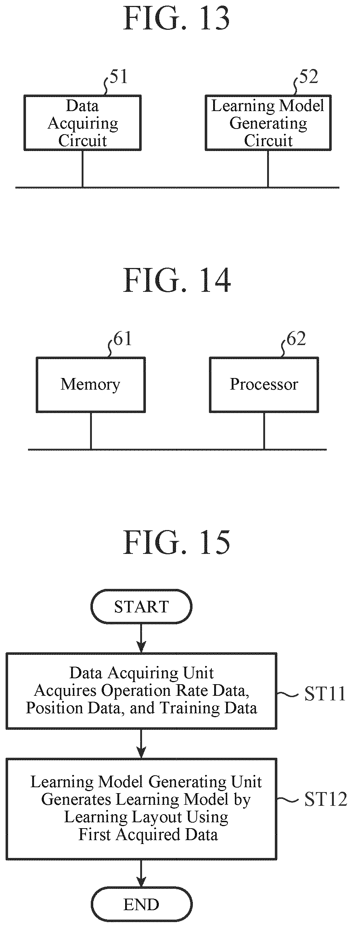

FIG. 13 is a hardware configuration diagram illustrating hardware of the learning model generation device according to the fourth embodiment.

The learning model generation device illustrated in FIG. 12 includes a data acquiring unit 41 and a learning model generating unit 42.

The data acquiring unit 41 is implemented by, for example, a data acquiring circuit 51 illustrated in FIG. 13.

When generating the learning model 4 included in the layout creating unit 3 illustrated in FIG. 1, the data acquiring unit 41 acquires position data indicating an installation position of the electrical appliances installed in the space, usage condition data indicating usage conditions of the electrical appliances, and training data indicating a layout of the electrical appliances for the space.

That is, the data acquiring unit 41 acquires, as the usage condition data, the operation rate data indicating the operation rates of the M (M is an integer of 1 or more) electrical appliances (m) installed in the space. In addition, the data acquiring unit 41 acquires position data indicating the installation position of each of the electrical appliances (m) and training data indicating the layout of each of the electrical appliances (m) for the space. The training data indicates one or more electrical appliances suitable for installation in the space and an appropriate layout of the electrical appliances. It is assumed that the training data is generated by a space designer, an architectural designer, or the like.

The data acquiring unit 41 outputs the operation rate data, the position data, and the training data to the learning model generating unit 42 as first acquired data.

When generating the learning model 33 included in the layout creating unit 32 illustrated in FIG. 8, the data acquiring unit 41 acquires, as the usage condition data, the operation rate data indicating the operation rate of each of the M electrical appliances (m) installed in the space. In addition, the data acquiring unit 41 acquires position data indicating an installation position of each of the electrical appliances (m), path data indicating a path taken by the user in the space, and training data indicating a layout of each of the electrical appliances (m) for the space.

The data acquiring unit 41 outputs the operation rate data, the position data, the path data, and the training data to the learning model generating unit 42 as second acquired data.

When generating the learning model 35 included in the layout creating unit 34 illustrated in FIG. 10, the data acquiring unit 41 acquires, as the usage condition data, the operation rate data indicating the operation rate of each of the M electrical appliances (m) installed in the space. In addition, the data acquiring unit 41 acquires position data indicating an installation position of each of the electrical appliances (m), path data indicating a path taken by the user in the space, and training data indicating a layout of each of the electrical appliances (m) for the space.

Furthermore, the data acquiring unit 41 acquires one or more pieces of data among family data indicating a family structure of a user living in the space, animal presence data indicating presence or absence of an animal in the space, and hobby data indicating a hobby of the user.

The data acquiring unit 41 outputs the one or more pieces of above-described data, the operation rate data, the position data, the path data, and the training data to the learning model generating unit 42 as third acquired data.

The learning model generating unit 42 is implemented by, for example, a learning model generating circuit 52 illustrated in FIG. 13.

When the first acquired data is output from the data acquiring unit 41, the learning model generating unit 42 generates the learning model 4 included in the layout creating unit 3 illustrated in FIG. 1 using the first acquired data.

That is, the learning model generating unit 42 generates the learning model 4 by learning the layout of one or more electrical appliances (m) suitable for installation in the space using the first acquired data. When the operation rate data indicating the operation rate $OR_n$ of each of the N electrical appliances (n) (n = 1, ···, N) included in the measurement targets among the plurality of electrical appliances installed in a certain space and the position data indicating the installation position $P_n$ of each of the electrical appliances (n) are given, the learning model 4 outputs layout data indicating a layout for a certain space of all the electrical appliances (n) included in the measurement targets or a part of the electrical appliances (n) included in the measurement targets.

When the second acquired data is output from the data acquiring unit 41, the learning model generating unit 42 generates the learning model 33 included in the layout creating unit 32 illustrated in FIG. 8 using the second acquired data.

That is, the learning model generating unit 42 generates the learning model 33 by learning the layout of one or more electrical appliances (m) suitable for installation in the space using the second acquired data. When the operation rate data indicating the operation rate $OR_n$ of each of the electrical appliances (n), the position data indicating the installation position $P_n$ of each of the electrical appliances (n), and the path data indicating the path taken by the user in the space are given, the learning model 33 outputs layout data indicating a layout for a certain space of all the electrical appliances (n) included in the measurement targets or a part of the electrical appliances (n) included in the measurement targets.

When the third acquired data is output from the data acquiring unit 41, the learning model generating unit 42 generates the learning model 35 included in the layout creating unit 34 illustrated in FIG. 10 using the third acquired data.

That is, the learning model generating unit 42 generates the learning model 35 by learning the layout of one or more pieces of data among the family data, the animal presence data, and the hobby data, the operation rate data indicating the operation rate $OR_n$ of each of the electrical appliances (n), the position data indicating the installation position $P_n$ of each of the electrical appliances (n), and the path data indicating the path taken by the user in the space are given, the learning model 35 outputs layout data indicating a layout for a certain space of all the electrical appliances (n) included in the measurement targets or a part of the electrical appliances (n) included in the measurement targets.

In FIG. 12, it is assumed that each of the data acquiring unit 41 and the learning model generating unit 42, which are components of the learning model generation device, is implemented by dedicated hardware as illustrated in FIG. 13. That is, it is assumed that the layout creation device is implemented by the data acquiring circuit 51 and the learning model generating circuit 52.

Each of the data acquiring circuit 51 and the learning model generating circuit 52 corresponds to, for example, a single circuit, a composite circuit, a programmed processor, a parallel programmed processor, ASIC, FPGA, or a combination thereof.

The components of the learning model generation device are not limited to those implemented by dedicated hardware, but the learning model generation device may be implemented by software, firmware, or a combination of software and firmware.

FIG. 14 is a hardware configuration diagram of a computer in a case where the learning model generation device is implemented by software, firmware, or the like.

In a case where the learning model generation device is implemented by software, firmware, or the like, a program for causing a computer to execute a processing procedure in each of the data acquiring unit 41 and the learning model generating unit 42 is stored in the memory 61. Then, the processor 62 executes the program stored in the memory 61.

Furthermore, FIG. 13 illustrates an example in which each of the components of the learning model generation device is implemented by dedicated hardware, and FIG. 14 illustrates an example in which the learning model generation device is implemented by software, firmware, or the like. However, this is merely an example, and a part of the components in the learning model generation device may be implemented by dedicated hardware, and the remaining components may be implemented by software, firmware, or the like.

Next, the operation of the learning model generation device illustrated in FIG. 12 will be described.

FIG. 15 is a flowchart illustrating a learning model generation method which is a processing procedure performed in the learning model generation device.

First, an operation in a case where the learning model generation device generates the learning model 4 included in the layout creating unit 3 illustrated in FIG. 1 will be described.

The data acquiring unit 41 acquires operation rate data indicating an operation rate of each of the M electrical appliances (m) installed in the space, position data indicating an installation position of each of the electrical appliances (m), and training data indicating a layout of each of the electrical appliances (m) for the space (step ST11 in FIG. 15).

In the learning model generation device illustrated in FIG. 12, a space in which various numbers of electrical appliances (m) are installed is assumed. Therefore, the data acquiring unit 41 acquires, with changing the value of M, the operation rate data indicating the operation rate of each of the electrical appliances (m) installed in various spaces having different numbers of installed electrical appliances, the position data indicating the installation position of each of the electrical appliances (m), and the training data indicating the layout of each of the electrical appliances (m).

The data acquiring unit 41 outputs the operation rate data, the position data, and the training data to the learning model generating unit 42 as first acquired data.

When the first acquired data is output from the data acquiring unit 41, the learning model generating unit 42 generates the learning model 4 included in the layout creating unit 3 illustrated in FIG. 1 using the first acquired data.

That is, the learning model generating unit 42 generates the learning model 4 by learning the layout of one or more electrical appliances (m) suitable for installation in the space using the first acquired data (step ST12 in FIG. 15).

The learning model 4 outputs layout data when the operation rate data indicating the operation rate $OR_n$ of each of the N electrical appliances (n) (n = 1, ···, N) included in the measurement targets and the position data indicating the installation position $P_n$ of each of the electrical appliances (n) are given. Since the generation processing of the learning model 4 itself is a known technique, detailed description thereof will be omitted.

The learning model 4 generated by the learning model generating unit 42 is implemented in the layout creating unit 3 illustrated in FIG. 1.

Next, an operation in a case where the learning model generation device generates the learning model 33 included in the layout creating unit 32 illustrated in FIG. 8 will be described.

The data acquiring unit 41 acquires operation rate data indicating an operation rate of each of the M electrical appliances (m) installed in the space, position data indicating an installation position of each of the electrical appliances (m), path data indicating a path taken by the user in the space, and training data indicating a layout of each of the electrical appliances (m) for the space.

The data acquiring unit 41 outputs the operation rate data, the position data, the path data, and the training data to the learning model generating unit 42 as second acquired data.

When the second acquired data is output from the data acquiring unit 41, the learning model generating unit 42 generates the learning model 33 included in the layout creating unit 32 illustrated in FIG. 8 using the second acquired data.

That is, the learning model generating unit 42 generates the learning model 33 by learning the layout of one or more electrical appliances (m) suitable for installation in the space using the second acquired data.

The learning model 33 outputs layout data when the operation rate data indicating the operation rate $OR_n$ of each of the N electrical appliances (n) included in the measurement targets, the position data indicating the installation position $P_n$ of each of the electrical appliances (n), and the path data indicating the path taken by the user in a certain space are given.

The learning model 33 generated by the learning model generating unit 42 is implemented in the layout creating unit 32 illustrated in FIG. 8.

Next, an operation in a case where the learning model generation device generates the learning model 35 included in the layout creating unit 34 illustrated in FIG. 10 will be described.

The data acquiring unit 41 acquires operation rate data indicating an operation rate of each of the M electrical appliances (m) installed in the space, position data indicating an installation position of each of the electrical appliances (m), path data indicating a path taken by the user in the space, and training data indicating a layout of each of the electrical appliances (m) for the space.

Furthermore, the data acquiring unit 41 acquires one or more pieces of data among family data indicating a family structure of a user living in the space, animal presence data indicating presence or absence of an animal in the space, and hobby data indicating a hobby of the user.

The data acquiring unit 41 outputs the one or more pieces of above-described data, the operation rate data, the position data, the path data, and the training data to the learning model generating unit 42 as third acquired data.

When the third acquired data is output from the data acquiring unit 41, the learning model generating unit 42 generates the learning model 35 included in the layout creating unit 34 illustrated in FIG. 11 using the third acquired data.

That is, the learning model generating unit 42 generates the learning model 35 by learning the layout of one or more electrical appliances (m) suitable for installation in the space using the third acquired data.

The learning model 35 outputs layout data when one or more pieces of data among family data, animal presence data, and hobby data, operation rate data indicating an operation rate $OR_n$ of each of the electrical appliances (n), position data indicating an installation position $P_n$ of each of the electrical appliances (n), and path data indicating a path taken by the user in a certain space are given.

The learning model 35 generated by the learning model generating unit 42 is implemented in the layout creating unit 34 illustrated in FIG. 10.

In the above-described fourth embodiment, the learning model generation device is configured to include the data acquiring unit 41 to acquire position data indicating an installation position of an electrical appliance installed in a space, usage condition data indicating a usage condition of the electrical appliance, and training data indicating a layout of the electrical appliances for the space, and the learning model generating unit 42 to learn the layout of one or more electrical appliances suitable for installation in the space using the position data acquired by the data acquiring unit 41, the usage condition data acquired by the data acquiring unit 41, and the training data acquired by the data acquiring unit 41, and generate a learning model 4 that outputs layout data indicating a layout for a certain space of all electrical appliances installed in a certain space or a part of the electrical appliances installed in a certain space when position data indicating an installation position of an electrical appliance installed in a certain space and usage condition data indicating a usage condition of the electrical appliance installed in a certain space are given. Therefore, the learning model generation device can generate the learning model 4 for acquiring the layout data indicating the layout of the electrical appliances without taking time and effort for the user.

It should be noted that, in the present disclosure, embodiments can be freely combined, any component of each of the embodiments can be modified, or any component in each of the embodiments can be omitted.

INDUSTRIAL APPLICABILITY

The present disclosure is suitable for a layout creation device and a layout creation method for acquiring layout data indicating a layout of electrical appliances.

The present disclosure is suitable for a learning model generation device and a learning model generation method for generating a learning model.

**REFERENCE SIGNS LIST**

1: operation rate calculating unit, 2: position data acquiring unit, 3: layout creating unit, 4: learning model, 5: display processing unit, 6: display, 11: operation rate calculating circuit, 12: position data acquiring circuit, 13: layout creating circuit, 14: display processing circuit, 15: path observing circuit, 16: layout creating circuit, 17: layout creating circuit, 21: memory, 22: processor, 31: path observing unit, 32: layout creating unit, 33: learning model, 34: layout creating unit, 35: learning model, 41: data acquiring unit, 42: learning model generating unit, 51: data acquiring circuit, 52: learning model generating circuit, 61: memory, 62: processor

**Claims**

**1.** A layout creation device comprising:

a position data acquiring unit to acquire position data indicating an installation position of an electrical appliance installed in a space; and
a layout creating unit to create layout data indicating a layout of the electrical appliance for the space by giving the position data and usage condition data indicating a usage condition of the electrical appliance to a learning model.

2. The layout creation device according to claim 1, wherein the electrical appliance is supplied with power from a non-contact power supply coil installed in the space.

3. The layout creation device according to claim 2, wherein

the usage condition data is calculated on a basis of a power supply condition of the non-contact power supply coil, and
the position data indicates an installation position of the non-contact power supply coil that supplies power to the electrical appliance.

4. The layout creation device according to claim 1, further comprising an operation rate calculating unit to calculate an operation rate of the electrical appliance on a basis of an energization time of the electrical appliance, wherein as the usage condition data, operation rate data indicating the operation rate calculated by the operation rate calculating unit is used.

5. The layout creation device according to claim 1, wherein the layout data includes an installation recommended electrical appliance and an installation position of the installation recommended electrical appliance.

6. The layout creation device according to claim 1, further comprising a path observing unit to output path data indicating a path taken by a user living in the space through the space, wherein
the layout creating unit creates the layout data by giving the path data to the learning model in addition to giving the position data and the usage condition data to the learning model.

7. The layout creation device according to claim 1, wherein the layout creating unit creates the layout data by giving one or more pieces of data among family data indicating a family structure of a user living in the space, animal presence data indicating presence or absence of an animal in the space, and hobby data indicating a hobby of the user to the learning model in addition to giving the position data and the usage condition data to the learning model.

8. The layout creation device according to claim 1, wherein

the position data acquiring unit acquires the position data of the electrical appliance installed in the space where the user who has a billing contract lives, and
the layout creating unit creates the layout data of the electrical appliance for the space where the user lives.

9. A layout creation method comprising:

acquiring, by a position data acquiring unit, position data indicating an installation position of an electrical appliance installed in a space; and
creating, by a layout creating unit, layout data indicating a layout of the electrical appliance for the space by giving the position data and usage condition data indicating a usage condition of the electrical appliance to a learning model.

10. A learning model generation device comprising:

a data acquiring unit to acquire position data indicating an installation position of an electrical appliance installed in a space, usage condition data indicating a usage condition of the electrical appliance, and training data indicating a layout of the electrical appliance for the space; and
a learning model generating unit to learn a layout of one or more electrical appliances suitable for installation in the space using the position data, the usage condition data, and the training data, and generate a learning model that outputs layout data indicating a layout for a certain space of all electrical appliances installed in the certain space or a part of electrical appliances installed in the certain space when position data indicating an installation position of the electrical appliance installed in the certain space and usage condition data indicating a usage condition of the electrical appliance installed in the certain space are given.

**11.** A learning model generation method comprising:

acquiring, by a data acquiring unit, position data indicating an installation position of an electrical appliance installed in a space, usage condition data indicating a usage condition of the electrical appliance, and training data indicating a layout of the electrical appliance for the space; and

learning, by a learning model generating unit, a layout of one or more electrical appliances suitable for installation in the space using the position data, the usage condition data, and the training data, and generating a learning model that outputs layout data indicating a layout for a certain space of all electrical appliances installed in the certain space or a part of electrical appliances installed in the certain space when position data indicating an installation position of the electrical appliance installed in the certain space and usage condition data indicating a usage condition of the electrical appliance installed in the certain space are given.

# FIG. 1

Layout Creation Device

Operation Rate Calculating Unit 1

Layout Creating Unit 3

Learning Model 4

Display Processing Unit 5

Position Data Acquiring Unit 2

Display 6

# FIG. 2

Operation Rate Calculating Circuit 11

Position Data Acquiring Circuit 12

Layout Creating Circuit 13

Display Processing Circuit 14

# FIG. 3

Non-Contact Power Supply Coils

EP 4 113 350 A1

# FIG. 4

```
      ⌐21                      ⌐22
┌─────────────┐        ┌─────────────┐
│   Memory    │        │  Processor  │
└──────┬──────┘        └──────┬──────┘
       │                      │
───────┴──────────────────────┴────────
```

# FIG. 5

```
        ╭─────────────╮
        │    START    │
        ╰──────┬──────╯
               ▼
┌──────────────────────────┐
│      Operation Rate      │
│ Calculating Unit Measures│ ～ ST1
│ Energization Time in Each of │
│   N Electrical Appliances │
└──────────────┬───────────┘
               ▼
┌──────────────────────────┐
│      Operation Rate      │
│ Calculating Unit Calculates │ ～ ST2
│  Operation Rate of Each of │
│    Electrical Appliances  │
└──────────────┬───────────┘
               ▼
┌──────────────────────────┐
│ Position Data Acquiring Unit │
│   Acquires Position Data  │
│   Indicating Installation │ ～ ST3
│     Position of Each of   │
│    Electrical Appliances  │
└──────────────┬───────────┘
               ▼
┌──────────────────────────┐
│    Layout Creating Unit   │ ～ ST4
│    Creates Layout Data    │
└──────────────┬───────────┘
               ▼
┌──────────────────────────┐
│   Display Processing Unit │
│   Outputs Display Data for │ ～ ST5
│ Displaying Layout to Display │
└──────────────┬───────────┘
               ▼
        ╭─────────────╮
        │     END     │
        ╰─────────────╯
```

# FIG. 6

Before Proposal

Entrance

Audio Device

Electric Fan

Refrigerator

Microwave Oven

Kitchen

Toilet

Bathtub

LD

Television

Heater

# FIG. 7

Entrance

After Proposal

Audio Device

Addition Recommendation
(Small Refrigerator)

Removal Recommendation
(Electric Fan)

Movement Recommendation
(Microwave Oven)

Movement Recommendation
(Refrigerator)

Toilet

Bathtub

Kitchen

LD

Movement Recommendation
(Television)

Addition Recommendation
(Speaker Device)

Movement Recommendation
(Heater)

# FIG. 8

# FIG. 9

# FIG. 10

**Layout Creation Device**

Operation Rate Calculating Unit /1

Position Data Acquiring Unit /2

Path Observing Unit /31

Layout Creating Unit /34

Learning Model /35

Display Processing Unit /5

Display /6

# FIG. 11

Operation Rate Calculating Circuit /11

Position Data Acquiring Circuit /12

Path Observing Circuit /15

Layout Creating Circuit /17

Display Processing Circuit /14

# FIG. 12

Data Acquiring Unit /41

Learning Model Generating Unit /42

## FIG. 13

## FIG. 14

## FIG. 15

START

Data Acquiring Unit
Acquires Operation Rate Data,
Position Data, and Training Data — ST11

Learning Model Generating Unit
Generates Learning Model by
Learning Layout Using
First Acquired Data — ST12

END

## INTERNATIONAL SEARCH REPORT

| International application No. |
| --- |
| PCT/JP2020/016479 |

**A. CLASSIFICATION OF SUBJECT MATTER**
Int. Cl. G06F30/27(2020.01)i, G06F30/10(2020.01)i
FI: G06F17/50 634C, G06F17/50 604D

According to International Patent Classification (IPC) or to both national classification and IPC

**B. FIELDS SEARCHED**

Minimum documentation searched (classification system followed by classification symbols)
Int. Cl. G06F30/27, G06F30/10

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2010-272051 A (SEI OPTIFRONTIER CO., LTD.) 02 December 2010, paragraphs [0017]-[0053], fig. 1-7 | 1-11 |
| A | JP 2016-163481 A (SHIMIZU CORP.) 05 September 2016, paragraphs [0012]-[0107], fig. 1-16 | 1-11 |
| A | JP 2020-9138 A (TOYOTA HOME KK) 16 January 2020, paragraphs [0020]-[0086], fig. 1-9 | 1-11 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29.06.2020 | 07.07.2020 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT
Information on patent family members

| International application No. |
| --- |
| PCT/JP2020/016479 |

| Patent Documents referred to in the Report | Publication Date | Patent Family | Publication Date |
| --- | --- | --- | --- |
| JP 2010-272051 A | 02.12.2010 | (Family: none) | |
| JP 2016-163481 A | 05.09.2016 | (Family: none) | |
| JP 2020-9138 A | 16.01.2020 | (Family: none) | |

Form PCT/ISA/210 (patent family annex) (January 2015)

**EP 4 113 350 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014049081 A